# FASCICULE DE BREVET EUROPEEN

(11) **EP 0 717 565 B1**
(45) Date de publication et mention de la délivrance du brevet: **26.01.2000**
(21) Numéro de dépôt: 95402746.2
(22) Date de dépôt: 06.12.1995
(51) Int. Cl.: H04N 7/16, H04N 7/173

(54) **Console interactive de réception de télévision**
Interaktive Konsole für Fernsehempfang
Interactive console for television reception

(30) Priorité: 13.12.1994 FR 9414997
(43) Date de publication de la demande: 19.06.1996
(73) Titulaire: SYSECA S.A., 92240 Malakoff (FR)
(72) Inventeur: Devaux, François, F-92402 Courbevoie Cedex (FR)
(74) Mandataire: Beylot, Jacques

(56) Documents cités:
- EP-A- 0 595 354
- EP-A- 0 624 040
- WO-A-91/06160

## Description

La présente invention concerne un système interactif permettant de participer, de chez soi, en regardant son récepteur de télévision, à une émission de télévision tel qu'un jeu ou un téléachat ou tout autre application à caractère transactionnel comme une page de publicité ou autre.

Parmi les systèmes existants, à la disposition des téléspectateurs, on connaît le système multipoints. Celui-ci se contente d'un boîtier genre calculette, spécialisé dans un type déterminé de transaction qui est un jeu à lots. Ce boîtier comporte un clavier, des capteurs photoélectriques permettant de saisir des informations transmises en binaire par deux rectangles lumineux clignotants apparaissant sur l'écran du téléviseur à certains moments et un microcontrôleur avec une mémoire permettant d'enregistrer l'activité du clavier et les informations lumineuses saisies par les capteurs photoélectriques. Pour participer à un jeu multipoints proposé lors d'une émission de télévision, le téléspectateur doit saisir, grâce aux capteurs photoélectriques de son boîtier, des informations transmises à l'écran par deux rectangles lumineux clignotants pour identifier le jeu. Ensuite, il tape éventuellement sur le clavier de son boîtier un code d'autorisation de participation au jeu puis un code de saisie pour répondre aux questions posées pendant le jeu télévisé. Pour connaître ses gains au jeu le téléspectateur doit retourner son boîtier auprès d'un distributeur ou revendeur équipé d'une borne spécialisée de traitement.

Ces systèmes sont très peu interactifs et n'ont d'ailleurs pas un grand succès commercial.

On connaît également, par la demande internationale de brevet WO-A-91/06160 (RHOADES), un système de distribution de jeux vidéo avec un ou plusieurs centres de stockage et des abonnés éloignés reliés par téléphone et par un système de télévision câblée. Chaque abonné dispose d'une console de jeu qui affiche une image vidéo sur un récepteur de télévision standard et qui est relié à la fois par téléphone à un centre de stockage et par câble à une tête de distribution de programmes télévisés. La ligne téléphonique permet à l'abonné de choisir son jeu dont le programme lui est transmis sous forme codée par câble. La console de jeux comporte des moyens (clavier et écran) pour converser avec le centre de stockage par la ligne téléphonique et notamment pour recevoir un code d'autorisation pour l'emploi d'un jeu, des moyens de décodage d'un programme de jeu sélectionné qui est reçu par le câble et une carte de mémoire non volatile pour mémoriser un programme de jeu.

Une telle console de jeu n'est pas évolutive et est strictement spécialisée dans le choix d'un jeu à distance selon une procédure figée.

On connaît aussi, par la demande européenne de brevet EP-A-0 624 040 (AT & T), un système de télévision interactive dans lequel un abonné peut choisir son programme. Ce système de télévision interactive utilise, entre un centre serveur et des abonnés éloignés, un mode de transmission bidirectionnel par paquets sur un réseau câblé. L'intelligence de la transaction se situe au niveau du serveur et l'abonné dispose d'un boîtier d'interface spécialisé spécialement conçu pour répondre aux exigences du serveur dans le cadre d'une procédure de dialogue figée.

La présente invention a pour but un système interactif permettant à un téléspectateur de participer à des jeux, téléachat ou autres, qui soit d'une grande convivialité, d'un coût modique et facilement personnalisable pour l'adapter à diverses formes d'applications à caractère transactionnel non nécessairement prévues à l'origine.

Elle a pour objet une console interactive de réception de télévision comportant un récepteur de télévision relié par une voie de réception de programmes télévisés à un distributeur de programmes télévisés mettant en oeuvre des applications à caractère transactionnel ayant un déroulement par étapes et comportant des dialogues entre l'utilisateur de la console et le distributeur de programmes permettant ainsi au-dit utilisateur, comme au distributeur de programmes, d'influer sur leurs évolutions, et un boîtier d'interface pourvu de moyens d'émission de données reliés au distributeur de programmes télévisés par une voie d'émission de données, de moyens de réception de données reliés au distributeur de programmes télévisés par au moins une voie de réception de données et de moyens d'incrustation d'image dans une image reliés au récepteur de télévision et opérant sur l'image de fond présentée à l'écran de ce dernier. Cette console est remarquable en ce qu'elle comporte en outre :
- un clavier permettant l'intervention d'un opérateur,
- un lecteur de carte à puce, et
- une carte à puce à microcontrôleur avec une architecture basée sur un processeur associé à de la mémoire et à un système de communication avec l'extérieur, qui s'enfiche dans le lecteur de carte à puce et qui est programmée pour au moins une application à caractère transactionnel dont elle gère les étapes en fonction de données propres stockées dans sa mémoire et d'informations lui parvenant par le boîtier d'interface.

Grâce à la structure banalisée du boîtier d'interface et à la spécialisation de la carte à puce, cette console est d'un emploi à la fois large, adapté à une large gamme d'applications à caractère transactionnel, et sélectif.

Avantageusement, la voie de réception de données est superposée à la voie de réception de programmes télévisés et accessible depuis le récepteur de télévision. Elle peut être doublée avec une partie superposée à la voie de réception de programmes télévisés et une partie empruntant un canal téléphonique ou le canal du câble si le récepteur de télévision est raccordé à un réseau câblé.

La voie d'émission de données emprunte un canal téléphonique ou le canal du câble si le récepteur de télévision est raccordé à un réseau câblé.

Le clavier peut faire bloc avec le boîtier d'interface ou en être séparé et relié par une liaison filaire ou autre : infrarouge, radio,...pour en améliorer la maniabilité. Dans le cas où il est séparé du boîtier d'interface, le clavier peut être couplé au lecteur de carte à puce qui ne fait alors plus bloc avec le boîtier d'interface.

Le boîtier d'interface possède une alimentation électrique propre ou est alimenté par l'alimentation électrique du récepteur de télévision.

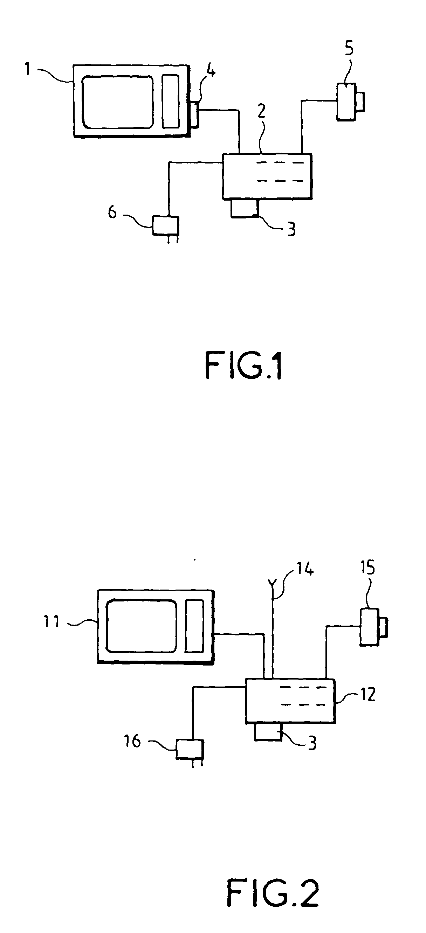

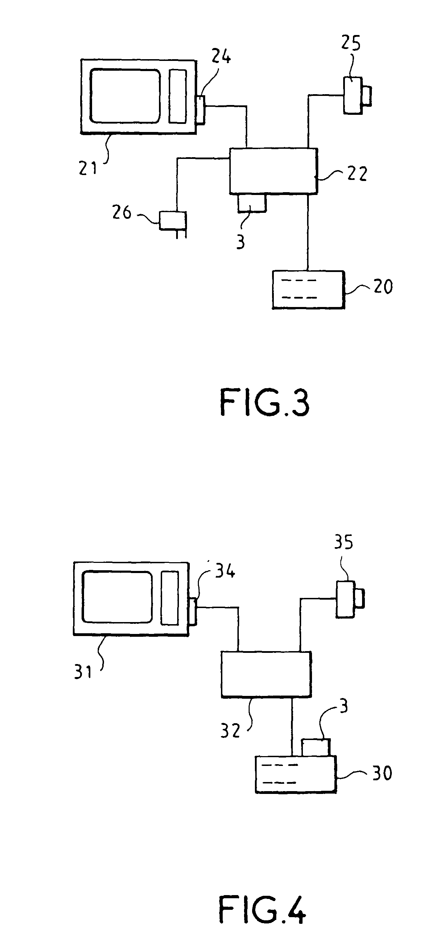

D'autres caractéristiques et avantages de l'invention ressortiront de la description de plusieurs modes de réalisation donnés à titre d'exemples. Cette description sera faite ci-après en regard du dessin dans lequel :
- une figure 1 représente schématiquement une console interactive de réception de télévision selon l'invention avec un récepteur de télévision à prise péritélévision ;
- une figure 2 représente schématiquement une console interactive de réception de télévision selon l'invention avec un récepteur de télévision dépourvu de prise péritélévision ;
- une figure 3 représente schématiquement une console interactive de réception de télévision selon l'invention avec un clavier déporté ; et
- une figure 4 représente schématiquement une console interactive de réception de télévision selon l'invention avec un clavier et un lecteur de carte à puce déportés et avec une alimentation électrique prise sur celle du récepteur de télévision.

On distingue sur la figure 1 les principaux éléments d'une console interactive de réception de télévision à savoir : un récepteur de télévision 1 un boîtier d'interface 2 et une carte à puce 3.

Le récepteur de télévision 1 est de type classique, avec une prise péritélévision permettant de détourner les signaux image et son après leur transposition en bande vidéo. Il reçoit des programmes télévisés par voie hertzienne ou par l'intermédiaire d'un réseau câblé.

Le boîtier d'interface 2 est relié au récepteur de télévision 1 par un connecteur péritélévision 4, à une ligne téléphonique par un connecteur téléphonique 5 et au secteur par une prise d'alimentation électrique 6. Il est pourvu d'un modem (modulateur-démodulateur) capable de gérer une transmission de données bidirectionnelle sur ligne téléphonique en direction ou au départ d'un serveur informatique spécialement programmé par le distributeur de programmes télévisés contenant des applications à caractère transactionnel, d'un circuit décodeur capable d'extraire du signal vidéo reçu par le récepteur de télévision des données en provenance du distributeur de programmes télévisés à destination des participants aux applications à caractère transactionnel, d'un circuit d'incrustation d'image opérant sur l'image vidéo du récepteur de télévision détournée à l'occasion de son passage par la prise péritélévision, d'un lecteur de carte à puce, d'un clavier et d'un microcontrôleur gérant ses différents éléments sous la maîtrise de la carte à puce 3.

La carte à puce 3 est une carte à microcontrôleur avec une architecture basée sur un processeur central CPU relié à des éléments de mémoire vive de type RAM et morte de type ROM et EEPROM par un bus interne non accessible de l'extérieur et sur un système de communication avec l'extérieur qui garantit l'étanchéité et la sécurité. La mémoire ROM contient un système d'exploitation permettant la gestion du composant et de sa sécurité tandis que la mémoire EEPROM contient un programme d'application en langage évolué qui est interprété en langage machine par un interpréteur de commande contenu dans le système d'exploitation.

La carte à puce 3 détermine grâce à son programme d'application stocké en mémoire EEPROM chaque étape d'une application à caractère transactionnel en fonction de données propres stockées en mémoire et d'informations qui parviennent au boîtier d'interface 2 par le clavier, par la ligne téléphonique et par la voie de données superposée aux programmes télévisés reçus par le récepteur de télévision 1.

Cette carte à puce est très différente d'une carte de pré-paiement qui ne renferme qu'une mémoire protégée par code porteur et qui ne permet que de décompter des points ou des jetons. Elle est également différente d'une cartouche de mémoire non volatile qui n'est constituée que de circuits mémoire câblés sur un support équipé d'un connecteur électrique et qui n'assure pas de fonction particulière de sécurité d'accès.

La voie de réception de données superposée aux programmes télévisés reçus par le récepteur de télévision peut contenir des informations en texte, en dessin ou en numérique intéressant les différentes phases d'une application à caractère transactionnel.

Elle peut être ajoutée au signal vidéo reçu soit par un codage type télétel dans les temps de retour trame et pendant les lignes de début et de fin de balayage invisibles à l'écran soit par un codage particulier occupant une certaine zone de l'image qui peut être noire à l'écran en ajustant la chrominance et qui est alors préférablement utilisée par le circuit d'incrustation pour superposer des informations visuelles à destination du téléspectateur sur le déroulement de l'application à caractère transactionnel en cours.

Elle peut être aussi ajoutée à la voie son en format genre DTMF (modulation à fréquences vocales) ou autre.

Elle est doublée par une voie d'émission et réception de données empruntant le canal téléphonique plus adaptée pour la transmission par le distributeur de programmes télévisés d'informations ciblées plus spécialement destinées au possesseur de la console.

Le déroulement d'une transaction peut être le suivant :

Lorsque le téléspectateur regarde un programme mettant en oeuvre une transaction, il est averti en clair de mettre en marche son boîtier d'interface. Celui-ci, dès qu'il est alimenté, déroule un programme de vérification du bon fonctionnement de ses éléments puis, en cas de tests positifs, active le lecteur de carte à puce pour passer sous le contrôle de la carte à puce qui doit s'y trouver. La carte à puce vérifie que la transaction envisagée est bien de son ressort en comparant un code interne avec un code émis sur la voie de données superposée au signal vidéo de réception du récepteur de télévision, appelle le serveur par voie téléphonique si nécessaire et déroule le processus de la transaction en informant le téléspectateur par l'intermédiaire du circuit d'incrustation à chaque fois que cela est nécessaire soit que le serveur ait à lui communiquer une information personnelle ou non soit qu'il ait à manifester un choix par l'intermédiaire du clavier. Bien entendu, la carte à puce peut être à code secret dans le cas où la transaction nécessite une habilitation du téléspectateur.

L'image et le son de l'émission de télévision peuvent être cryptés. La carte à puce 3 déroule alors un processus de décryptage en interceptant ou faisant intercepter par le lecteur le signal vidéo reçu au niveau de la prise péritélévision 4 et en renvoyant ou en faisant renvoyer par le lecteur les images traitées au récepteur de télévision toujours par sa prise péritélévision 4 pour un affichage à l'écran.

Les informations supplémentaires incrustées à l'écran du récepteur de télévision peuvent être produites par la carte à puce 3 ou envoyées par le serveur par la voie de transmission de données superposée au programme télévisé reçu ou par la liaison téléphonique. Dans ce dernier cas, elles peuvent être issues d'une émulation Minitel qui est assurée par la carte à puce 3. Dans tous les cas leur affichage se fait sous la maîtrise de la carte à puce 3.

La carte à puce 3 peut être privative et permettre l'accès à des données moyennant sécurisation. L'achat de la carte à puce 3 donne alors des droits qui peuvent être gérés dans le temps par la carte elle même.

La carte à puce 3 peut opérer avec sécurisation par code, authentification ou signature.

Comme le boîtier d'interface 2 n'est pas spécialisé et comporte une électronique standard permettant de recevoir les images, de les traiter, de les renvoyer au récepteur de télévision, d'assurer la fonction de liaison téléphonique, de recevoir une carte à puce et de traiter les informations transmises par le clavier, il peut être utilisé pour de nombreux types de transactions télévisées dans lesquelles les participants sont guidés par des informations plus ou moins personnelles affichées en incrustation sur l'image du récepteur de télévision et où une communication de chaque participant avec un serveur apporte des possibilités de dialogue permettant l'exercice immédiat de choix ou de sélection aussi bien de la part du participant que de la part du serveur.

Cependant, cela ne signifie pas que tout possesseur du boîtier d'interface est capable de suivre n'importe quelle transaction. Il faut en effet, pour rendre opérationnel un boîtier d'interface, avoir la carte à puce qui gère le déroulement de la transaction désirée.

C'est la carte à puce qui permet de lancer une application transactionnelle. Au cours d'une transaction, elle peut engranger un crédit sous forme de points Bonus, dont l'unité de valeur est définie par le propriétaire de l'application. Ces points Bonus acquis au cours d'une séquence interactive peuvent être cumulés et être finalement échangés contre la valeur que leur donne le propriétaire de l'application, par exemple dans un magasin. Cette circulation de points Bonus peut être la base de motivation d'un jeu publicitaire.

Plusieurs applications peuvent être éventuellement gérées par une même carte à puce et être chargées dans des répertoires distincts, chez un revendeur. Cette acquisition peut être temporaire ou définitive. Le mode d'acquisition peut être varié comme le chargement sur une borne chez un revendeur d'application, voir un site de vente. Il peut aussi être chargé par connexion à un serveur Minitel, et, dans ce cas, le mode de paiement est défini à la connexion, et au temps passé ou autre par fourniture d'information carte bancaire.

La figure 2 illustre une variante de la console interactive de réception de télévision de la figure 1 dans laquelle le récepteur de télévision 11 est dépourvu d'une prise péritélévision et où la liaison avec le boîtier d'interface 12 se fait par l'intermédiaire du câble d'antenne UHF ou VHF qui est détourné par le boîtier d'interface 12 avant de parvenir à l'antenne ou au point de branchement d'un réseau câblé 14.

Comme précédemment, le boîtier d'interface 12 est relié à une ligne téléphonique par une connecteur téléphonique 15 et au secteur par une prise d'alimentation 16. Il est équipé d'un clavier et d'un lecteur de carte à puce destiné à recevoir une carte à puce 3 assurant la maîtrise du déroulement d'une transaction.

La figure 3 illustre une autre variante de la console interactive de réception de télévision de la figure 1 dans laquelle le clavier 20 a été détaché du boîtier d'interface 22. Comme dans le cas de la figure 1, le boîtier d'interface 22 est relié au récepteur de télévision 21 par un connecteur péritélévision 24, à une ligne téléphonique par un connecteur téléphonique 25 et au secteur par une prise d'alimentation 26.

Le fait que le clavier 20 soit séparé du boîtier d'interface 22 et relié à celui-ci par une liaison filaire ou par une liaison infrarouge ou radio apporte une plus grande aisance dans la manipulation de la console.

La figure 4 illustre encore une autre variante de la console interactive de réception de télévision de la figure 1 dans laquelle le clavier 30 et le lecteur de carte à puce ont été séparés du boîtier d'interface 32 pour une meilleure maniabilité. Comme dans le cas de la figure 1 le boîtier d'interface 32 est relié au récepteur de télévision 31 par un connecteur péritélévision 34 et à une ligne téléphonique par un connecteur téléphonique 35. Mais il n'a pas d'alimentation électrique propre, celle-ci étant commune avec celle du récepteur de télévision grâce à un raccordement particulier de la prise péritélévision 34. Il pourrait également être alimenté par l'alimentation du récepteur de télévision 31 au travers d'une prise spécifique à cet effet.

Bien entendu, la présente invention n'est pas limitée aux modes de réalisations décrits et représentés mais elle est susceptible de nombreuses variantes accessibles à l'homme de l'art. La ligne téléphonique peut, notamment dans le cas d'un réseau de télévision câblé être remplacée par une voie de transmission de données sur le câble. Le boîtier d'interface peut être disposé à l'intérieur du récepteur de télévision et avoir pour clavier Celui de la télécommande du récepteur de télévision ce qui permet d'avoir une console interactive beaucoup plus compacte. Il peut également y avoir, dans le canal de réception de télévision, une porteuse auxiliaire affectée à la transmission d'informations particulières numériques ou autres, du générateur d'application vers le téléspectateur, sans effet sur la réception de l'image et du son mais détectable par des moyens adaptés de traitement de signal équipant le lecteur.

## Revendications

1. Console interactive de réception de télévision comportant un récepteur de télévision (1) relié par une voie de réception à un distributeur de programmes télévisés mettant en oeuvre des applications à caractère transactionnel ayant un déroulement par étapes et comportant des dialogues entre l'utilisateur de la console et le distributeur de programmes permettant ainsi au-dit utilisateur, comme au distributeur de programmes, d'influer sur leurs évolutions, et un boîtier d'interface (2) pourvu de moyens d'émission de données reliés au distributeur de programmes télévisés par une voie d'émission de données, de moyens de réception de données reliés au distributeur de programmes télévisés par au moins une voie de réception de données et de moyens d'incrustation d'image dans une image reliés au récepteur de télévision (1) et opérant sur l'image de fond présentée à l'écran de ce dernier, caractérisée en ce qu'elle comporte en outre :
- un clavier permettant l'intervention d'un opérateur,
- un lecteur de carte à puce, et
- une carte à puce (3) à microcontrôleur avec une architecture basée sur un processeur associé à de la mémoire et à un système de communication avec l'extérieur, qui s'enfiche dans le lecteur de carte à puce et qui est programmée pour gérer le déroulement du processus à étapes d'au moins une application à caractère transactionnel en fonction de données propres stockées dans sa mémoire et d'informations lui parvenant par le boîtier d'interface.

2. Console selon la revendication 1, caractérisée en ce que lesdits moyens de réception de données sont reliés au distributeur de programmes télévisés par au moins une voie de réception de données superposée à la voie de réception de programmes télévisés.

3. Console selon la revendication 1, caractérisée en ce que lesdits moyens d'émission de données sont reliés au distributeur de programmes télévisés par une voie d'émission de données empruntant une ligne téléphonique.

4. Console selon la revendication 1, pourvue d'un récepteur de télévision relié à un distributeur de programmes télévisés par une voie de réception de programmes télévisés empruntant un réseau câblé, caractérisée en ce que lesdits moyens d'émission de données sont reliés au distributeur de programmes télévisés par une voie d'émission de données empruntant ledit réseau câblé.

## Patentansprüche

1. Interaktive Fernsehempfangskonsole, mit einem Fernsehempfänger (1), der über einen Empfangskanal an einen Verteiler von Fernsehprogrammen angeschlossen ist, wobei der Verteiler Anwendungen mit Transaktionscharakter anbietet, die einen Ablauf in Schritten vorsehen und Dialoge zwischen dem Benutzer der Konsole und dem Verteiler von Programmen beinhalten, durch die der Benutzer ebenso wie der Verteiler von Programmen den Ablauf beeinflussen kann, und mit einem Schnittstellengerät (2), das mit dem Verteiler von Fernsehprogrammen über einen Datensendekanal verbundene Mittel zur Aussendung von Daten, mit dem Verteiler von Fernsehprogrammen über mindestens einen Datenempfangskanal verbundene Mittel sowie Mittel zur Einfügung von Bildern in ein Fernsehbild aufweist, die mit dem Fernsehempfänger (1) verbunden sind und auf das am Bildschirm des Fernsehempfängers angezeigte Hintergrundbild einwirken, dadurch gekennzeichnet, daß die Konsole weiter aufweist:
- eine Tastatur, über die ein Benutzer eingreifen kann,
- einen Chipkartenleser
- und eine Chipkarte (3) mit einem Mikrokontrollorgan und einem auf einem Prozessor mit einem Speicher und einem System zum Verkehr nach außen beruhenden Aufbau, wobei die Chipkarte in den Chipkartenleser eingesteckt werden kann und für mindestens eine Anwendung mit Transaktionscharakter programmiert ist, deren Ablaufschritte sie abhängig von in ihrem Speicher enthaltenen eigenen Daten und von Informationen steuert, die ihr über das Schnittstellengerät zugeführt werden.

2. Konsole nach Anspruch 1, dadurch gekennzeichnet, daß die Datenempfangsmittel mit dem Fernsehprogramm-Verteiler über mindestens einen Datenempfangskanal verbunden sind, der dem Empfangskanal für Fernsehprogramme überlagert ist.

3. Konsole nach Anspruch 1, dadurch gekennzeichnet, daß die Datensendemittel mit dem Verteiler von Fernsehprogrammen über einen Datensendekanal verbunden sind, der über eine Telefonleitung verläuft.

4. Konsole nach Anspruch 1, der einen Fernsehempfänger enthält, welcher an einen Verteiler für Fernsehprogramme über einen Empfangskanal für Fernsehprogramme angeschlossen ist, der über ein Kabelnetz verläuft, dadurch gekennzeichnet, daß die Datensendemittel mit dem Verteiler für Fernsehprogramme über einen Datensendekanal in Verbindung stehen, der auch über das Kabelnetz verläuft.

## Claims

1. Interactive television receiver console comprising a television receiver (1) connected by a reception channel to a televised programme distributor implementing transactional applications which proceed in steps and comprise dialogues between the console user and the programme distributor enabling both said user and the programme distributor to accordingly influence the way in which they develop, and an interface pack (2) provided with data transmission means linked to the televised programme distributor by a data transmission channel, data reception means linked to the televised programme distributor by at least one data reception channel, and image overlay means linked to the television receiver (1) and working on the background image presented to the screen of said receiver, characterised in that the console furthermore comprises:
- a keyboard enabling action by an operator,
- a chip card reader, and
- a microcontroller chip card (3) with an architecture based on a processor associated with memory and with a system of communication with the exterior, which gets plugged into the chip card reader and which is programmed for at least one transactional application, all the steps of which it manages as a function of its own data elements stored in the memory and information elements reaching it via the interface pack.

2. Console according to claim 1, characterised in that said data reception means are linked to the televised programme distributor by at lest one data reception channel superimposed on the televised program reception channel.

3. Console according to claim 1, characterised in that said data transmission means are linked to the televised programme distributor by a data transmission channel using a telephone line.

4. Console according to claim 1, provided with a television receiver linked to a televised programme distributor by a televised programme reception channel using a cable network, characterised in that said data transmission means are linked to the televised programme distributor by a data transmission channel using said cable network.
